# EUROPEAN PATENT APPLICATION

(11) **EP 3 981 838 A1**
(43) Date of publication of application: **13.04.2022**
(21) Application number: 20200366.1
(22) Date of filing: 06.10.2020
(51) Int. Cl.: C08L 97/02, C08L 91/00, C08L 67/00, C08L 3/02, C08L 1/02, B65D 65/46, C08K 3/34

(54) **EMBOSSED BIODEGRADABLE AND COMPOSTABLE MATERIAL**

(71) Applicant: Gaia Holding AB, 253 68 Helsingborg (SE)
(72) Inventor: Rosén, Åke, 254 54 HELSINGBORG (SE)
(74) Representative: AWA Sweden AB

(57) **Abstract**

The present invention relates to a method for preparing an embossed biodegradable and compostable material, the method comprises the steps of (a) polishing 0-15 % by weight particles of dolomite to remove sharp edges on the surface;(b) mixing said polished particles with 1-5 % by weight of at least one oil of vegetable origin to provide a non-sticky mixture;(c) heat mixing a composition comprising (i) 0-40 % by weight of at least one biodegradable and/or decayable aromatic ester; (ii) 5-15 % by weight of starch of vegetable origin; (iii) 10-20 % by weight of an additive chosen from hydrated magnesium silicate; (iv) 0-40 % by weight of at least one aliphatic ester; (v) 30-55 % by weight of paper fiber; and (vi) 0-2 % by weight of silica thereafter, during continued mixing,(d) adding said non-sticky mixture of step (b) to said heat mixed composition to provide an extrudable mixture;(e) extruding said extrudable mixture of step (d) into granules;(f) subjecting the granules to conventional blow molding, thermo forming, extrusion or injection molding to provide the material; and (g) embossing the material of step (f) to provide an embossed material.

## Description

### Technical field of the invention

The present invention relates to a method for preparing an embossed biodegradable and compostable material having a unique composition of different components providing a material that is fully biodegradable and fully compostable after decomposition and which is clearly distinguishable from other materials of the category. The present invention further relates to an embossed biodegradable and compostable material obtained by the method.

### Technical Background

The use of fossil based plastic materials has during late time been more and more questioned, especially when used in disposable articles, hygiene products and as bags, e.g. plastic bags. The conventional raw material for the commonly used plastic polyethene (PE) is petroleum or natural gas. This raw material is not renewable, it is not degradable and during combustion it releases methane gas. To overcome some of this, PE has instead been produced from sugar canes. However, even if sugar canes being a renewable raw material, it still releases methane gas during combustion and it is not degradable. Further, sugar canes are produced in Brazil, leading to long transport of the material, and during production, sugar canes demand large amount of water.

Moreover, to be able to recycle PE from one article to produce a new one, it has to go through a process of autoclaving to remove bacteria. This process is more costly than producing new PE, leading to a low degree of recycling and thus more use of the raw materials.

Further, recycled plastic or rubber has in some cases shown to compose substances toxic to human or nature, making them not suitable for use at places where they are exposed to humans.

Even further, use of plastics in many products has led to the release of small plastic components, called micro plastics, into the ground and water. Micro plastics have been found all over the globe and it is today not known what environmental effects the large distribution can have.

From both governments and public there is a large demand for better materials to use in disposable products. The materials to be used must be made to a large extent of renewable sources, be biodegradable and compostable. One such material commonly used is polylactic acid (PLA) produced from starch. However, this material comes with some drawbacks, some of them being that the temperature for decomposition is 70 ºC, but the softening temperature is 50 ºC. This gives drawbacks during decomposition, since a high temperature is needed to initiate the process, while at the same time the products soften at 50 ºC which restrain the products from being used in environments with temperatures above 50 ºC.

EP 3 260 495 discloses a biodegradable polyester composition comprising 60-100 parts of biodegradable aliphatic-aromatic polyester. The composition further comprises polylactic acid (PLA), organic and/or inorganic filler as well as copolymer which contains epoxy groups and is based on styrene, acrylate and/or methacrylate.

Thus, there is a need for developing new materials for substituting plastics in many different areas, such as disposable products, and hygiene products.

### Summary of the invention

One object of the present invention is to provide a method for preparing an embossed biodegradable and compostable material, which is made from renewable resources, which is biodegradable, compostable, and which does not leave micro plastics.

A further objective of the present invention is to provide an embossed biodegradable and compostable material obtained by the method. Yet another object of the present invention is to provide the embossed biodegradable and compostable material in form of a multi-use bag, disposable straw, compostable trough, disposable cutlery, disposable sheet or a disposable waste bag suitable for use in a home compost.

The present invention concerns a method for preparing an embossed material suitable for replacing plastics, which composition is biodegradable, compostable, and which does not leave micro plastics. According to the invention, the method comprises the steps of:
(a) polishing 0-15 % by weight particles of dolomite to remove sharp edges on the surface;
(b) mixing said polished particles with 1-5 % by weight of at least one oil of vegetable origin to provide a non-sticky mixture;
(c) heat mixing a composition comprising (i) 0-40 % by weight of at least one biodegradable and/or decayable aromatic ester; (ii) 5-15 % by weight of starch of vegetable origin; (iii) 10-20 % by weight of an additive chosen from hydrated magnesium silicate; (iv) 0-40 % by weight of at least one aliphatic ester; (v) 30-55 % by weight of paper fiber; and (vi) 0-2 % by weight of silica thereafter, during continued mixing,
(d) adding said non-sticky mixture of step (b) to said heat mixed composition to provide an extrudable mixture;
(e) extruding said extrudable mixture of step (d) into granules;
(f) subjecting the granules to conventional blow molding, thermo forming, extrusion or injection molding to provide the material; and
(g) embossing the material of step (f) to provide an embossed material.

Hereby an improved material suitable for replacing plastic is provided, which is feasible for use in several disposable products, hygiene products or as multi-use bags, without leaving microplastics, and which is biodegradable and compostable. Dolomite is constantly renewed in the ground, provided from minerals. During decaying, it will again return to the soil and act as a soil improvement agent. Further, the mixing of dolomite having a polished surface, with at least one oil of vegetable origin will make the dolomite to function as a lubricant. Even further, the use of starch of vegetable origin will make the composition non-elastic and give the product a characteristic color which has a "wood-like" appearance. The "wood-like" appearance is beneficial and appealable to certain consumers since the wood-like appearance is perceived differently from a common plastic appearance, which may be connected with a negative environmental effect to certain consumers. This effect is further improved by the use of paper fiber. The use of paper fiber will additionally provide the material with an increased strength, making it suitable for multiple-use. Further, the use of at least one oil of vegetable origin will act as a coupling agent in the composition leading to a low permeability compared to plastics. Even further, the use of paper fiber or any other tree fiber can reduce the use of polyesters while yet still provide a structure rigid enough to be appropriate for being used as a replacement for several plastics used today. Further, the use of silica extracts the water from the paper fiber, making the end product more stable and reducing the tear of the machine under manufacturing. Further, silica provides an effect of simplifying the handling of the paper fiber during manufacturing of the composition since it effectively compresses the paper fiber and prevents it from becoming dust. Further, the embossing of the material will improve the appearance of the final product even further, making it more distinguishable to the consumer from other similar products with greater environmental impact.

The present invention further concerns, the embossed biodegradable and compostable material as obtained by the method as described above. The embossing affects the molecular chains of the composition in the granules. This provides with a material which is more durable. The material is more stretchable and stronger after the embossing compared to similar products without the embossing. This is beneficial since it allows for multiple-use of the products prepared from the material. This is in line with goals to minimize the environmental impact of products and consumption. Further, the embossing provides with a material which has a more profound paper-like structure and sound. The paper-like structure and sound are beneficial and appealable to certain consumers since it is less connected with negative environmental effects.

The present invention further concerns that the material may further be used as hygiene products, disposable product, or bags, such as multi-use bags.

Further for a component, such as a film or disposable, prepared from the material according to the present invention, the decomposition of said component may be initiated at 30-35 ºC if it is present under compostable conditions with bacteria present. The decomposition may be completed within two months when nothing more than earth remains. As compared to PLA where the decomposition requires 70 ºC to be initiated, which makes higher demand on the facilities handling the decomposition. By the composition of the present invention, the carbon dioxide (CO₂) emission is reduced up to 80%. From a life cycle analysis, it has been concluded that for each 6 tons of fossil plastics which is replaced by a material of the invention 6.6 tons of carbon dioxide emission can be saved. This is in line with goals to reduce global warming.

### Figures

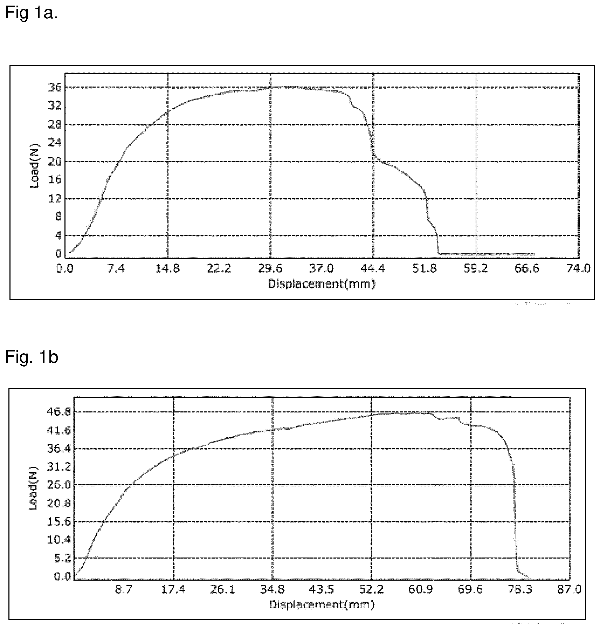

Fig. 1a discloses the results of a tensile strength test using a composition without embossing.
Fig. 1b discloses the results of tensile strength test using a composition including an embossing step during production.

### Definitions

The term "dolomite" means the mineral CaMg(CO₃)₂ or a commercially available product which is won from a natural occurring dolomite deposit or which is sold as "dolomite".

Talc is a clay mineral composed of hydrated magnesium silicate with the chemical formula Mg₃Si₄O₁₀(OH)₂.

The term "biodegradable" means material which decomposes substantially fully, and which does not discharge contaminants during incineration or leave plastic fragments after decomposition.

The term "particle size" means, for a non-spherical particle, the diameter of a corresponding spherical particle which apart from material is identical with the non-spherical particle regarding volume, weight or area.

The terms in the claims should have their general meaning within the technical area; unless any other definition has been given above. All referral to "a" or "the" "[composition, layer, container, film]" should be read as a referral to at least one of said composition, layer, container, film, etc. unless something else is specified.

### Detailed Description of the invention

The present invention concerns a method for preparing an embossed material suitable for replacing plastics which is biodegradable, compostable, and which does not leave micro plastics in the ground or water during or after use.

The method for preparing an embossed biodegradable and compostable material comprises the steps of;
(a) polishing 0-15 % by weight particles of dolomite to remove sharp edges on the surface;
(b) mixing said polished particles with 1-5 % by weight of at least one oil of vegetable origin to provide a non-sticky mixture;
(c) heat mixing a composition comprising (i) 0-40 % by weight of at least one biodegradable and/or decayable aromatic ester; (ii) 5-15 % by weight of starch of vegetable origin; (iii) 10-20 % by weight of an additive chosen from hydrated magnesium silicate; (iv) 0-40 % by weight of at least one aliphatic ester; (v) 30-55 % by weight of paper fiber; and (vi) 0-2 % by weight of silica thereafter, during continued mixing,
(d) adding said non-sticky mixture of step (b) to said heat mixed composition to provide an extrudable mixture;
(e) extruding said extrudable mixture of step (d) into granules;
(f) subjecting the granules to conventional blow molding, thermo forming, extrusion or injection molding to provide the material; and
(g) embossing the material of step (f) to provide an embossed material.

In one embodiment of the method according to the present invention, the mixing in step (d) and extrusion in step (e) may be performed under controlled pressure and heating.

The pressure may be below 300 bar, for instance 100-200 bar or even lower depending on the temperature and the production method of step (f). The temperature may be between e.g. 150 and 200 ºC.

The use of dolomite, which is being saturated with at least one oil of vegetable origin, will act as a lubricant for the machine during processing decreasing the tear thereof, as compared to processing of other materials.

From the material, several products can be produced. Among them are hygiene articles, disposable products, and multi-use bags. For further use, said material provides with characteristics for a material as to be very flexible, such that it can be hard to break even stiff products. This might be advantageous since the breaking of products can give rise to sharp structures which can be harmful. A flexible non-breakable product can then erase the risk of using the product as a sharp weapon if the products are used as for instance a disposable cutlery.

The use of at least one oil of vegetable origin to saturate dolomite particles as well as mixing with the starch of vegetable origin prevents water from permeabilizing the composition which increases tear strength and reduces permeability. This increases comfortability and usability when the material made from the present invention is further processed to be used as bags.

Mixing dolomite particles with at least one oil of vegetable origin until saturation allows the mix to act as a lubricant, reducing the tear of the machines used.

The non-sticky mixture of polished dolomite particles treated with oil of at least one vegetable origin, is mixed with the composition of starch of vegetable origin, aromatic ester, at least one aliphatic ester, hydrated magnesium silicate, paper fiber and silica at a temperature which may be 150-200 ºC and under a controlled pressure during continued mixing. The controlled pressure may be below 300 bar, but it may vary depending on production method. The mixing is preferably performed in an extruder, most preferably a twin-screw extruder.

The mixed composition will be cut into granules. The granules will then be used for further processing using standard machine processes such as blow molding, thermo forming, extrusion, or injection molding. The material will be embossed to provide it with a surface that is more paper-like. From such processes, several different products can be made such as hygiene products, disposable articles, and multi-use bags.

In one embodiment of the invention the biodegradable and/or decayable aromatic ester, e.g. aromatic polyester, may be a polybutylene adipate terephthalate (PBAT), a random copolymer produced from adipic acid, 1,4-butanediol, and terephthalic acid. Any other aromatic ester with similar properties as PBAT may be used. The at least one biodegradable and/or decayable aromatic ester is present in an amount of 0-40 % by weight. For instance, 0-10, 10-20, 20-30, 30-40 % by weight. For example, the at least one biodegradable and/or decayable aromatic ester is present in an amount of 5, 10, 15, 20, 25, 30, 35 or 40 % by weight as is disclosed in the experimental part.

Dolomite is a material acquired from the soil, where it originates from minerals. Said particles may have a polished surface, and by polishing the surface thereof the particles do not give rise to tear initiation in a film prepared from the composition. Thus, all edges that may give rise to a tear initiation in e.g. a film has been removed on the particles, and a level surface is produced which is smooth without any sharp corners. The particles constitute 0-15 % by weight of the composition. For example, 0-5 %, 5-10 %, 10-15 % by weight of the composition. In one embodiment the particles constitute 5 % by weight of the composition and in another composition the particles constitute 10 %.

Further, according to one embodiment of the present invention, said particles may have a size of about 2-4 µm. The particles may have a top-cut of 10 µm.

Said particles are treated with at least one oil of vegetable origin as to reach saturation. The mix of the particles and the oil make the particles to function as a lubricant, which decreases the tear of the machines used.

In one embodiment, the composition according to the invention may include at least one oil of vegetable origin. The oil may be rape seed oil. Glycerol being a polyol could be an alternative to a vegetable oil. The at least one oil of vegetable origin constitute 1-5 % by weight of the composition. For example, 1-3 % or 3-5 % by weight. The at least one oil of vegetable origin may for example constitute 3 or 5 % by weight of the composition.

The use of hydrated magnesium silicate further increases said lubricant effect, decreasing the tear of machines even further. The hydrated magnesium silicate, such as talcum constitute 10-20 % by weight of the composition. For example, 10-15 % or 15-20% by weight. In one embodiment the hydrated magnesium silicate constitutes 15 % by weight of the composition, in another composition the hydrated magnesium silicate constitutes 17 % by weight of the composition. In yet another embodiment it constitutes 10 % by weight of the total weight of the composition.

The composition includes starch of a vegetable origin, where said starch having a size of 4-20 µm or 20-100 µm or 4-100 µm, for instance around 3, 5, 10, 20, 30, 40, 50, 60, 70, 80, 90, 100 µm. The starch of vegetable origin constitutes 5-15 % by weight of the composition. For example, 5-10% or 10-15% by weight. The composition constitutes for example of 5 or 8 % by weight of starch. The use of starch gives the composition a characteristic "wood-like" color. This "wood-like" color is beneficial for the end product since its appearance will differ from other products of the same category. The addition of starch gives the composition characteristics such that further processing of the granules made thereof will provide a material being non-elastic making said material suitable to use for bags carrying heavy loads without tearing of the fingers. The mixing of starch with the non-sticky mixture of the dolomite particles and the at least one oil of vegetable origin erases water from the starch, which increases the firmness of the composition.

In one embodiment, the aliphatic ester, e.g. aliphatic polyester, is an acid modified with alcohol. In another embodiment, the aliphatic ester, e.g. aliphatic polyester, consists of polymerized units, where the repeating units consist of up to 15 carbon atoms such as up to 10 carbon atoms. In yet another embodiment, the aliphatic ester, e.g. aliphatic polyester, is a biodegradable polyester, such as polybutylene succinate (PBS). Polybutylene succinate being a fossil-free renewable polyester synthesized from 1,4-butane diol and succinic acid. PBS consists of polymerized units of butylene succinate, with repeating C₈H₁₂O₄ units. In another embodiment, the aliphatic ester, e.g. aliphatic polyester, may be polybutyl acrylate. Polybutyl acrylate (PBA) being synthesized e.g. from acetylene, 1-butyl alcohol, carbon monoxide, nickel carbonyl, and hydrochloric acid. PBA consists of polymerized units of butyl acrylate, with repeating (C₇H₁₂O₂) units. In yet another embodiment, the aliphatic ester, e.g. aliphatic polyester, may be polyhydroxy butyrate (PHB). In one embodiment, the PHB may be poly-3-hydroxybutyrate (P3HB). In yet another embodiment the PHB may be poly-4-hydroxybutyrate (P4HB). Polyhydroxy butyrate is a polyhydroxy-alkanoate (PHA), a polymer belonging to the polyesters class that are of interest as bio-derived and biodegradable.
Polyhydroxyalkanoates or PHAs are polyesters produced in nature by numerous microorganisms. When produced by bacteria they serve as both a source of energy and as a carbon store. More than 150 different monomers can be combined within this family to give materials with extremely different properties. These materials are biodegradable and are used in the production of bioplastics. PHB is a compostable and biodegradable polyester and derived from renewable sources as it is produced by microorganisms as a response to physiological stress. Using polyhydroxyl butyrate allows for degradation of the end product in water. Any other aliphatic polyester having similar properties as polybutylene succinate may be used. The at least one aliphatic ester may constitute 0-40 % by weight of the composition. For example, 0-10 %, 10-20 %, 20-30 % or 30-40 % by weight of the composition. The composition constitutes for example 40, 30, 20 or 10 % by weight of at least one aliphatic ester as is described in the experimental part.

The composition includes paper fiber, where said paper fiber being processed to a powder with a particle size of 4-15 µm, for instance around 4, 6, 8, 10, 12, or 15 µm. The paper fiber constitutes 30-55 % by weight of the composition. For instance, 30-35 %, 35-40, 40-45, 45-50 or 50-55 % by weight of the composition. The composition constitutes for example 30 % or 35 % by weight of paper fiber. The paper fiber can be produced from waste material in the paper industry or in the wood industry. Any other similar source of paper fiber may be used. The paper fiber is a renewable source of material, making the end-product more environmentally friendly and sustainable. The composition comprising paper fiber may be degradable and solvable in water, which is beneficial from an environmentally point of view. It is a well-known problem that nature including the oceans and lakes around the globe are full of plastics which are non-solvable in water.

The composition may include silica. Silica is an oxide of silicone, naturally found as quartz. The silica constitutes 0-2 % by weight of the composition. For instance, 0-1 or 1-2 % by weight of the composition. The composition constitutes for example 1 or 2 % by weight of silica. By using silica, it assists processing the paper fiber making it easier for the machine to handle and remove the dust from the paper fiber. Further, it reduces the water content of the paper fiber, making the end product less brittle.

In a compost container, the formation of methane gas requires 30-35 ºC to start. The methane gas further increases the growth of bacteria, which starts the decaying process. For the present invention, this is enough for the decaying process to start, while bioplastic compositions comprising PLA according to prior art require a temperature of 70 ºC for the decomposition to start. A product, for example a film with the thickness of up to 25 µm, and even up to 1 mm, produced from the granules made from the composition according to the present invention can be fully decomposed in 180 days during the conditions stated above. If the temperature is further increased to 55 ºC the decomposition process will be reduced to a time of some weeks.

During the decaying process of products prepared from the granules created from the present invention, some of the product will decay and may give rise to biogas, and the remaining within the digested sludge will be spread out on the fields. Dolomite will not influence the decaying process but will act as soil improvement agent out on the fields as it will neutralize the pH, which is favorable for soil. The dolomite will for instance provide the soil with growth factors such as calcium and magnesium and other important minerals.

If the end product ends up in the water, the composition may break down without leaving any rest products in the water. The dolomite may then act as an improvement agent of the seabed.

The problem with the use of plastic material from fossil sources, or from raw material which does not degrade in nature are getting increased attention from governments as well as the public. The use of plastics in products giving rise to micro plastics in soil and water has also gained interest during later years. The composition of the present invention is fully biodegradable and compostable, without being a source of micro plastics. The dolomite is a neutral component within the composition, as it returns back to the nature in the same form as it is withdrawn from the nature. The starch and the oil according to the present invention come from vegetable origin, which is a renewable raw material, while the aromatic esters available on the market as of today mostly is from non-renewable raw material, but also from partly renewable and fully degradable sources, such as PBAT disclosed above. The composition according to the present invention may only comprise 6-30 % of non-renewable raw material.

One embodiment of the present invention comprises a method for preparing an embossed biodegradable and compostable material, the method comprises the steps of;
(a) polishing 5 % by weight particles of dolomite to remove sharp edges on the surface;
(b) mixing said polished particles with 5 % by weight of at least one oil of vegetable origin to provide a non-sticky mixture;
(c) heat mixing a composition comprising (i) 20 % by weight of at least one biodegradable and/or decayable aromatic ester; (ii) 8 % by weight of starch of vegetable origin; (iii) 15 % by weight of an additive chosen from hydrated magnesium silicate; (iv) 10 % by weight of at least one aliphatic ester; (v) 35 % by weight of paper fiber; and (vi) 2 % by weight of silica thereafter, during continued mixing,
(d) adding said non-sticky mixture of step (b) to said heat mixed composition to provide an extrudable mixture;
(e) extruding said extrudable mixture of step (d) into granules;
(f) subjecting the granules to conventional blow molding; and
(g) embossing the material of step (f) to provide an embossed material. The material was further manufactured into a multi-use bag.

In another embodiment of the present invention, the method for preparing an embossed biodegradable and compostable material comprises the steps of;
(a) polishing 10 % by weight particles of dolomite to remove sharp edges on the surface;
(b) mixing said polished particles with 3 % by weight of at least one oil of vegetable origin to provide a non-sticky mixture;
(c) heat mixing a composition comprising (i) 20 % by weight of at least one biodegradable and/or decayable aromatic ester; (ii) 8 % by weight of starch of vegetable origin; (iii) 17 % by weight of an additive chosen from hydrated magnesium silicate; (iv) 10 % by weight of at least one aliphatic ester; (v) 30 % by weight of paper fiber; and (vi) 2 % by weight of silica thereafter, during continued mixing,
(d) adding said non-sticky mixture of step (b) to said heat mixed composition to provide an extrudable mixture;
(e) extruding said extrudable mixture of step (d) into granules;
(f) subjecting the granules to conventional thermo forming; and
(g) embossing the material of step (f) to provide an embossed material. The material was made into a compostable trough.

In yet another embodiment of the present invention the method for preparing an embossed biodegradable and compostable material comprises the steps of;
(a) polishing 10 % by weight particles of dolomite to remove sharp edges on the surface;
(b) mixing said polished particles with 3 % by weight of at least one oil of vegetable origin to provide a non-sticky mixture;
(c) heat mixing a composition comprising (i) 30 % by weight of at least one biodegradable and/or decayable aromatic ester; (ii) 5 % by weight of starch of vegetable origin; (iii) 10 % by weight of an additive chosen from hydrated magnesium silicate; (iv) 10 % by weight of at least one aliphatic ester; (v) 31 % by weight of paper fiber; and (vi) 1 % by weight of silica thereafter, during continued mixing,
(d) adding said non-sticky mixture of step (b) to said heat mixed composition to provide an extrudable mixture;
(e) extruding said extrudable mixture of step (d) into granules;
(f) subjecting the granules to conventional extrusion; and
(g) embossing the material of step (f) to provide an embossed material. The material was made into a biodegradable straw.

In another embodiment of the present invention, the method for preparing an embossed biodegradable and compostable material comprises the steps of;
(a) polishing 5 % by weight particles of dolomite to remove sharp edges on the surface;
(b) mixing said polished particles with 3 % by weight of at least one oil of vegetable origin to provide a non-sticky mixture;
(c) heat mixing a composition comprising (i) 30 % by weight of at least one biodegradable and/or decayable aromatic ester; (ii) 5 % by weight of starch of vegetable origin; (iii) 10 % by weight of an additive chosen from hydrated magnesium silicate; (iv) 5 % by weight of at least one aliphatic ester; (v) 41 % by weight of paper fiber; and (vi) 1 % by weight of silica thereafter, during continued mixing,
(d) adding said non-sticky mixture of step (b) to said heat mixed composition to provide an extrudable mixture;
(e) extruding said extrudable mixture of step (d) into granules;
(f) subjecting the granules to conventional injection molding; and
(g) embossing the material of step (f) to provide an embossed material. The material was made into a biodegradable cutlery.

In one embodiment of the present invention the majority of the dolomite particles may have a particle size of about 2-4 µm. The dolomite particles may have a top-cut of 10 µm, meaning that a minority part of the particles having a size above 2-4 µm may be present.

The polishing of the surface of the dolomite particles, according to the present invention, such that substantially no sharp edges remain on the surface of the particles will increase tear strength. Mixing the particles to saturation with at least one oil of vegetable origin will convert the dolomite particles into a lubricant which will limit the apparatus wear during processing thereof.

In one embodiment of the present invention the starch of vegetable origin may have a particle size of 4-100 µm, 20-100 µm or 4-20 µm, such as 4-10 µm, 10-20 µm, 10-40 µm, for example 20-30 µm, 30-50 µm, 50-100 µm, such as 80-100 µm. The starch may be chosen from at least one of wheat, oat, rye and barley or from any other suitable vegetable starch source available such as from maize, potato, rize. The use of starch will give the composition characteristics such that further processing of the granules made thereof will provide a material being non-elastic making the material suitable to use for bags carrying heavy loads without tearing of the fingers. Further, the use of starch will give a characteristic color making it possible to distinguishing products made from the invention from other similar products.

Mixing the starch with the non-sticky mixture of dolomite particle and at least one oil of vegetable origin will saturate the capillaries of the starch, ensuring that the starch is free from water and thereby increase the strength of the composition.

In one embodiment of the present invention the paper fiber particle size is 4-15 µm, such as 4-10 µm or 10-15 µm. The inclusion of paper fiber makes it possible to reduce the use of polyesters, making the composition more environmentally friendly and making it possible for the end product to decompose in water.

The invention also concerns an embossed biodegradable and compostable material obtained by the method as described herein or an embossed biodegradable and compostable material prepared according to the method as described herein in form of a multiple-use bag, disposable straw, compostable trough, disposable cutlery, disposable sheet or a disposable waste bag suitable for use in a home compost.

The film or multiple-use bags may have a thickness of about 15-200 µm depending of the specific use, e.g. have a thickness of 15-50, 50-100, 100-150, or 150-200 µm depending on the aim of the film or bag.

### EXAMPLES

By way of examples, and not limitation, the following examples identify a variety of compositions pursuant to the embodiments of the present invention.

### Experiment 1

In the first experiment dolomite particles, in a concentration of 5 % by weight of the calculated final composition, were polished to acquire smooth edges. Next, the particles were mixed with 5 % by weight of rapeseed oil to saturate the particles. The result of the mixing was a non-sticky mixture functioning as a lubricant in the further processing steps.

In parallel, 20 % by weight of polybutylene adipate terephthalate, PBAT, was mixed with 8 % by weight of rye, 15 % by weight of talcum powder, 10 % of polybutylene succinate, 35 % by weight of paper fiber and 2 % by weight of silica during heating to 150 ºC under a pressure of 225 bar. The mixing was done in an extruder and the lubricant mixture from the first step was added to the extruder.

Using the extruder, the composition was pushed out of the extruder and cut into granules. The total weight of the composition was 5000 ton. The granules were further processed by blow molding into a film. The film further embossed and manufactured into a multi-use bag.

### Experiment 2

In the second experiment 10 % by weight, of the final composition, of dolomite particles were polished to remove sharp edges. The particles were next mixed with 3 % by weight of rape seed oil, in order for the particles to function as a lubricant.

Further, 20 % by weight of polybutylene adipate terephthalate, PBAT, was heat mixed at a temperature of 200 ºC and a pressure of 225 bar with 8 % by weight of rye, 17 % by weight of talcum powder, 10 % by weight of polybutylene succinate, 30 % by weight of paper fiber and 2 % by weight of silica. The mixing was performed in an extruder and the lubricant mix of talcum powder and rapeseed oil was added to the mixture.

The mixture was pressed out of the extruder and cut into granules. The total weight of the composition was 5000 ton. The granules were further processed using thermo folding into a compostable trough. The trough was embossed. The use of rye in the mixture gave the trough a characteristic "wood-like" color, making it easy to distinguish it from other products of the same category. Further, the embossing made the surface of the trough acquire a visual expression that distinguish it from other similar products.

### Experiment 3

In a third experiment 10 % by weight, of the final composition, of dolomite particles were polished to remove sharp edges. It was further mixed with 3 % by weight of rapeseed oil in order for the particles to function as a lubricant.

30 % by weight of PBAT was further, under a temperature of 200 ºC and a pressure of 225 bar, mixed with 5 % by weight of oat, 10 % by weight of talcum powder, 10 % by weight of polybutylene succinate, 31 % by weight of paper fiber and 1 % by weight of silica. The mixing was performed in an extruder and the lubricant mixture was further added. The mixture was further cut into granules. The total weight of the composition was 5000 ton. The granules were further processed by extrusion followed by embossing and were processed into a straw. The straw being fully biodegradable and compostable.

### Experiment 4

In a fourth experiment 5 %, by weight of the final composition, of dolomite particles were polished to acquire particles with no sharp edges. The particles were mixed with 3 % by weight of rapeseed oil, in order for the particles to function as a lubricant.

Further, 30 % by weight of PBAT was mixed with 5 % by weight of rye, 10 % by weight of talcum powder, 5 % by weight of polybutylene succinate, 41 % by weight of paper fiber and 1 % by weight of silica. The mixing was performed at 150 ºC and under a pressure of 225 bar. The mixing was performed in an extruder and the lubricant mix was further added. The composition was cut into granules. The total weight of the composition was 5000 ton. The granules were further processed by injection molding into cutlery. The material was embossed to acquire a unique surface, making the product more paper-like. The cutlery being stiff, but yet flexible such that they cannot be broken into pieces that have sharp edges. This eliminates the risk of using the cutleries as sharp for instance sharp weapons.

### Experiment 5

The fifth experiment was a decomposition experiment. The bag produced from the material of the present invention, from experiment 1 was placed in a compost. The temperature in the compost was approximately 30 ºC at the start of the experiment. This induced the formation of methane gas, which in turn induced the growth of bacteria. During the decomposition process the temperature naturally increases over time to approximately 50 ºC, where the decomposition of the bag goes very fast. In under 180 days, the bag was completely decomposed, and the remaining sludge was used as soil fertilizer.

### Experiment 6

The sixth experiment was a tensile strength test. The test compared the strength between a piece of embossed film from the present invention ("embossed") with a piece of plain film composed of the same ingredients ("plain") without embossing. The width of the pieces of the films was 70 mm, the thickness was 0.070 mm, the gauge length was 50 mm and the area was 0.53 mm². The result is presented in the table below. It is obvious from these results that the embossing of the material provides with a film that has superior strength compared to the film without embossing, thereby less material may be used and energy in the production an embossed bag compared with a non-embossed bag of the same composition and equal strength.

| **Parameter** | **Embossed** | **Plain** |
|---|---|---|
| Stress (MPa) | 88.55 | 68.91 |
| Yield stress (MPa) | 69.75 | 68.91 |
| Broken stress (MPa) | -0.69 | -0.10 |
| Elongation (%) | 159.3 | 133.8 |
| Max load (N) | 46.5 | 36.2 |
| Yield load (N) | 36.6 | 36.2 |
| Broken load (N) | -0.4 | -0.1 |
| Broken elongation (mm) | 79.650 | 66.920 |
| Tear resistance (N/mm) | 664.28 | 517.14 |

The results of above experiment are further demonstrated in Fig. 1a disclosing the properties of the composition without embossing and Fig. 1b disclosing the properties of the composition with embossing.

## Claims

**1.** A method for preparing an embossed biodegradable and compostable material, the method comprises the steps of;
(a) polishing 0-15 % by weight particles of dolomite to remove sharp edges on the surface;
(b) mixing said polished particles with 1-5 % by weight of at least one oil of vegetable origin to provide a non-sticky mixture;
(c) heat mixing a composition comprising (i) 0-40 % by weight of at least one biodegradable and/or decayable aromatic ester; (ii) 5-15 % by weight of starch of vegetable origin; (iii) 10-20 % by weight of an additive chosen from hydrated magnesium silicate; (iv) 0-40 % by weight of at least one aliphatic ester; (v) 30-55 % by weight of paper fiber; and (vi) 0-2 % by weight of silica thereafter, during continued mixing,
(d) adding said non-sticky mixture of step (b) to said heat mixed composition to provide an extrudable mixture;
(e) extruding said extrudable mixture of step (d) into granules;
(f) subjecting the granules to conventional blow molding, thermo forming, extrusion or injection molding to provide the material; and
(g) embossing the material of step (f) to provide an embossed material.

**2.** A method for preparing an embossed biodegradable and compostable material according to claims 1, wherein the mixing in step (d) and extrusion in step (e) is performed at a temperature from 150 to 200 ºC.

**3.** A method for preparing an embossed biodegradable and compostable material according to claim 1 or 2, wherein said dolomite particles have a particle size of 2-4 µm.

**4.** A method for preparing an embossed biodegradable and compostable material according to claims 1-3, wherein said starch of vegetable origin is chosen from at least one of wheat, oat, rye and barley.

**5.** A method for preparing an embossed biodegradable and compostable material according to claims 1-4, wherein said starch of vegetable origin has a particle size of 4-100 µm.

**6.** A method for preparing an embossed biodegradable and compostable material according to claims 1-5, wherein said hydrated magnesium silicate is talcum powder.

**7.** A method for preparing an embossed biodegradable and compostable material according to claims 1-6, wherein said aliphatic ester is a biodegradable aliphatic ester.

**8.** A method for preparing an embossed biodegradable and compostable material according to claims 1-7, wherein said paper fiber has a particle size of 4-15 µm.

**10.** A method for preparing an embossed biodegradable and compostable material according to claims 1-8, wherein said paper fiber is obtained from left-overs or waste from the paper industry.

**11.** An embossed biodegradable and compostable material obtainable by the method as described in claims 1-10.

**12.** The embossed biodegradable and compostable material according to claim 11, in form of a multiple-use bag, disposable straw, compostable trough, disposable cutlery, disposable sheet or a disposable waste bag suitable for use in a home compost.
